# EUROPÄISCHE PATENTANMELDUNG

(11) **EP 0 950 868 A1**
(43) Veröffentlichungstag der Anmeldung: **20.10.1999**
(21) Anmeldenummer: 99201167.6
(22) Anmeldetag: 14.04.1999
(51) Int. Cl.: F25D 13/00

(54) **Kühlbox**

(30) Priorität: 16.04.1998 BE 9800292
(71) Anmelder: Dumoulin, Marc Gaston Adrien, 8800 Roeselare (BE)
(72) Erfinder: Dumoulin, Marc Gaston Adrien, 8800 Roeselare (BE)
(74) Vertreter: Donné, Eddy

(57) **Zusammenfassung**

Kühlbox, dadurch gekennzeichnet, daß sie einen Boden (2) umfaßt, auf diesem Boden (2) stehende, isolierte aufrecht stehende Wände (3,4,5,6) und eine an diesen Wänden (3,4,5,6) anschließende isolierte obere Wand (7), die zusammen einen geschlossenen Innenraum (11) begrenzen, und einen Kühlmechanismus (12) zum Kühlen dieses Innenraums (11), wobei in einer der aufrecht stehenden Wände (3,4,5,6) eine Tür (9) angebracht ist und über dem vorgenannten Boden (2) ein bewegbares Tragelement (13) angebracht ist, das durch die in offener Position befindliche Tür (9) zwischen einer Position, worin es sich vollständig im Innenraum (11), über dem Boden (2), befindet, und einer Position, wobei es sich ganz oder teilweise außerhalb des Innenraums (11) befindet, bewegt werden kann.

## Beschreibung

Die vorliegende Erfindung betrifft eine Kühlbox.

Es sind bereits Kühlboxen bekannt in Form einer Wanne, bestehend aus isolierten aufrecht stehenden Wänden und einem isolierten Deckel und einer in oder auf dieser Wanne montierten Kühlvorrichtung, zum Aufbewahren von allerhand Produkten.

Das Einbringen in die Kühlbox oder Herausholen aus der Kühlbox von der Oberseite her kann mühsam sein, vor allem bei umfangreichen Produkten oder Produkten, die mit einem Kran oder derartigem transportiert werden.

Derartige Kühlboxen sind dann auch nicht für das zeitweilige Aufbewahren von Kadavern geeignet.

Bei einem Tiersterben ist es ratsam, den Kadaver in Erwartung der Ankunft der Tierkörperabfuhr zu kühlen.

Hierzu wird der Kadaver oft in einem Zelt außerhalb der Ställe aufbewahrt.

Der Nachteil davon ist, daß der isolierende Effekt eines Zelts sehr eingeschränkt ist.

Manchmal ist in den Stallungen ein beschränkter Raum vorhanden, der gekühlt werden kann. Hierdurch geht allerdings in den Stallungen Platz verloren.

Beide Lösungen weisen jedoch den großen Nachteil auf, daß der Kadaver, wenn die Tierkörperabfuhr an Ort und Stelle kommt, erst aus dem Zelt oder vorgenannten Raum herausgeholt werden muß, bevor er mit einem Kran oder derartigem aufgehoben werden kann, um in den Lastwagen der Tierkörperabfuhr gebracht zu werden.

Dieses Herausholen kann eine eventuelle Ansteckung verbreiten. Das Reinigen des Zelts oder Raums ist kompliziert, und auch die anderen Stellen, wo der Kadaver gelegen hat, müssen gereinigt werden.

Darüber hinaus ist der Kadaver nicht gegen Insekten abgeschirmt.

Die vorliegende Erfindung bezweckt eine Kühlbox, die die vorgenannten und andere Nachteile ausschließt und wobei die aufzubewahrenden oder zu kühlenden Produkte leicht in die Kühlbox gebracht und herausgeholt werden können und die für das zeitweilige Aufbewahren eines Kadavers besonders geeignet ist.

Dieses Ziel wird erfindungsgemäß durch eine Kühlbox erreicht, die einen Boden umfaßt, auf diesem Boden stehende, isolierte aufrecht stehende Wände und eine an diesen Wänden anschließende isolierte obere Wand, die zusammen einen geschlossenen Innenraum begrenzen, und einen Kühlmechanismus zum Kühlen dieses Innenraums, wobei in einer der aufrecht stehenden Wände eine Tür angebracht ist und über dem vorgenannten Boden ein bewegbares Tragelement angebracht ist, das durch die in offener Position befindliche Tür zwischen einer Position, worin es sich vollständig im Innenraum, über dem Boden, befindet, und einer Position, wobei es sich ganz oder teilweise außerhalb des Innenraums befindet, bewegt werden kann.

Vorzugsweise ist die Kühlbox mit Führungen für das bewegbare Tragelement versehen.

Diese Führungen können am Boden befestigt sein. Sie können aus zwei oder mehr Teilen bestehen, wovon mindestens ein Teil bis außerhalb des Innenraums gebracht werden kann. Diese Teile sind beispielsweise scharnierbeweglich miteinander verbunden.

Die vorgenannte Tür kann in der aufrecht stehenden Wand, die die Vorderwand bildet, angebracht sein, und kann durch die gesamte Vorderwand gebildet sein.

Die Tür ist vorzugsweise unten scharnierbeweglich und kann somit nach außen heruntergeklappt werden.

Wenn die Kühlbox Führungen aus mindestens zwei Teilen umfaßt, umfaßt sie vorzugsweise auch Stützen für die Teile der Führungen, die außerhalb des Innenraums gebracht werden können.

Der Boden kann durch einen Sockel oder ein Untergestell gebildet werden oder kann durch einen Boden gebildet werden, auf dem die aufrecht stehenden Wände aufstehen.

Mit der Absicht, die Merkmale der Erfindung besser darzustellen, sind hiernach, als Beispiele ohne jeden einschränkenden Charakter, einige bevorzugte Ausführungsformen einer Kühlbox gemäß der Erfindung beschrieben, unter Verweis auf die begleitenden Zeichnungen, worin:
Figur 1 eine schematische Ansicht einer Kühlbox gemäß der Erfindung in Perspektive darstellt;
Figur 2 eine Perspektivansicht einer anderen Ausführungsform der Kühlbox gemäß der Erfindung darstellt;
Figur 3 einen Querschnitt der Kühlbox von Figur 2 darstellt, jedoch in Bezug auf einen anderen Zustand; die
Figuren 4 und 5 Querschnitte analog denen von Figur 3 darstellen, jedoch in Bezug auf noch andere Zustände;
Figur 6 in größerem Maßstab einen Querschnitt des Teils darstellt, das in Figur 2 mit F6 angedeutet ist; die
Figuren 7 bis 9 Querschnitte analog zu denjenigen von den Figuren 3 bis 5 darstellen, jedoch in Bezug auf eine andere Ausführungsform der Kühlbox.

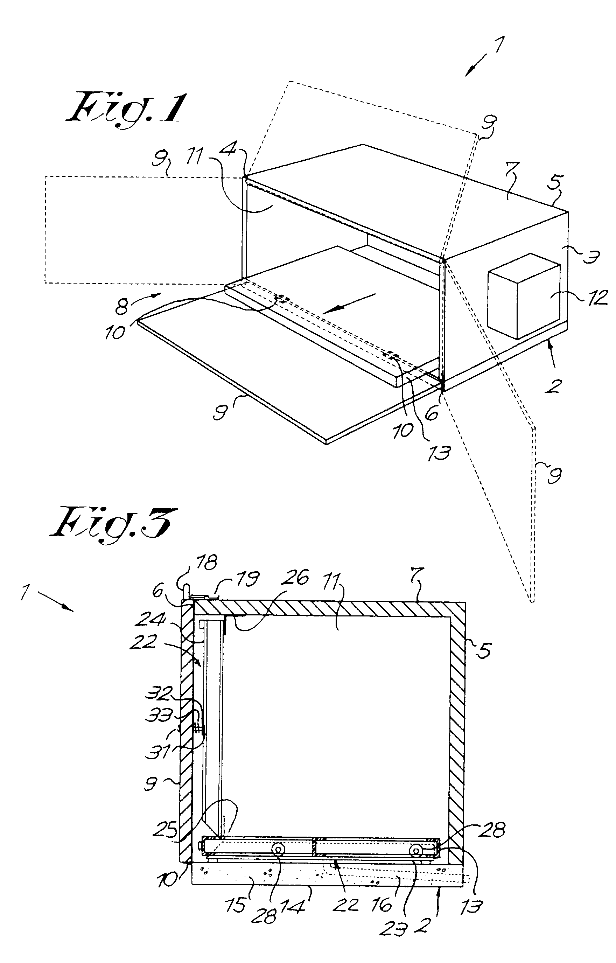

Wie in Figur 1 dargestellt, besteht die Kühlbox gemäß der Erfindung hauptsächlich aus einer Kiste 1, bestehend aus einem Boden 2; daran anschließenden isolierten aufrecht stehenden Wänden, nämlich zwei Seitenwänden 3 und 4, einer Rückwand 5 und einer Vorderwand 6; und einer isolierten oberen Wand 7, die an den vorgenannten aufrecht stehenden Wänden 3-6 anschließt.

Eine der aufrecht stehenden Wände, im dargestellten Beispiel die Vorderwand 6, ist mit einer Türöffnung 8 versehen, die durch eine Tür 9 verschließbar ist.

Die Tür 9 kann die gesamte Vorderwand 6 in Beschlag nehmen, wie in Figur 1 dargestellt, und unten mittels Scharnieren 10 herunterklappbar am Boden 2 befestigt sein.

In Varianten kann die Tür 9 auch scharnierbeweglich an der Seitenwand 3 oder 4 oder an der oberen Wand 7 befestigt sein, wie in gestrichelten Linien in Figur 1 dargestellt ist.

Die vorgenannten Wände 3 bis 7 bilden zusammen mit dem Boden 2 einen geschlossenen Innenraum 11, im Inneren der Kiste 1.

An der Seitenwand 3 ist ein Kühlmechanismus 12 angebracht, der über eine Öffnung mit dem Innenraum 11 in Verbindung steht.

Der Kühlmechanismus 12 besteht in der üblichen Weise aus einem Kühlkompressor, einem Kondensator, einem Kondensatorventilator und einem Verdampferventilator mit den erforderlichen Steuerungen, worunter ein Raumthermostat und ein Abtauthermostat sind, und kann von der Seitenwand 3 abnehmbar sein.

Instelle von an der Seitenwand 3 kann der Kühlmechanismus 12 an einer anderen Stelle, beispielsweise an der oberen Wand 7, an der Rückwand 5 oder an der Seitenwand 4 angebracht sein.

Im Innenraum 11 befindet sich über dem Boden 2 ein bewegbares Tragelement 13, das sich parallel zum Boden 2 erstreckt.

Dieses Tragelement 13 ist über den Boden 2 bewegbar, d.h. verschiebbar oder verrollbar, zwischen einer Endposition, wobei es sich vollständig im Innenraum 11 befindet, und einer Endposition, wobei es sich vollständig außerhalb dieses Innenraums 11 befindet. In Figur 1 ist das Tragelement 13 in einer Zwischenposition dargestellt.

Wenn ein Tier gestorben ist, kann der Kadaver, in Erwartung des Abholens durch die Tierkörperabfuhr, in der hiervor beschriebenen Kühlbox, die beispielsweise neben den Stallungen aufgestellt ist, aufbewahrt werden.

Hierzu wird die Tür 9 geöffnet und das Tragelement 13 nach außen gebracht. Der Kadaver wird auf dieses Tragelement 13 gelegt, wonach es nach innen zurückbewegt und die Tür 9 geschlossen wird.

Durch den Kühlmechanismus 12 wird der Innenraum 11 kühl gehalten, beispielsweise auf ungefähr 2°C, wodurch die Zersetzung des Kadavers vermieden wird.

Der Innenraum 11 ist praktisch hermetisch abgeschlossen, so daß das Eindringen von Insekten nahezu ausgeschlossen wird. Hierzu kann die Tür 9 sogar an ihren Kanten mit Dichtungsstreifen versehen sein, oder derartige Dichtungsstreifen können da, wo die Kanten der Tür 9 gegen den Rest der Kiste 1 kommen, an diesem Rest angebracht sein.

Durch das gute Abschließen und die Isolation der Wände ist der Energieverbrauch für die Kühlung relativ gering.

Ist die Tierkörperabfuhr zur Stelle, wird die Tür 9 erneut geöffnet und das Tragelement 13 mit dem Kadaver nach außen bewegt, so daß der Kadaver aufgenommen werden kann.

Durch das Vorhandensein des bewegbaren Tragelements 13 ist sowohl das Einbringen des Kadavers in die Kühlbox als auch das Herausnehmen relativ leicht. Wenn das Tragelement 13 nach außen gebracht ist, ist es leicht zugänglich, so daß ein Kadaver leicht mit einem Kran oder derartigem auf diesem Tragelement 13 plaziert oder davon abgenommen werden kann.

Das Einbringen oder Herausholen des Kadavers kann stattfinden, ohne auf dieser Tür 9 zu laufen, wodurch weniger Gefahr für die Verbreitung eventueller Infektionen besteht.

Anstelle eines Kadavers können auch andere zu kühlende Produkte auf die hiervor beschriebene Art und Weise in die bzw. aus der Kühlbox gebracht und zeitweilig darin aufbewahrt werden.

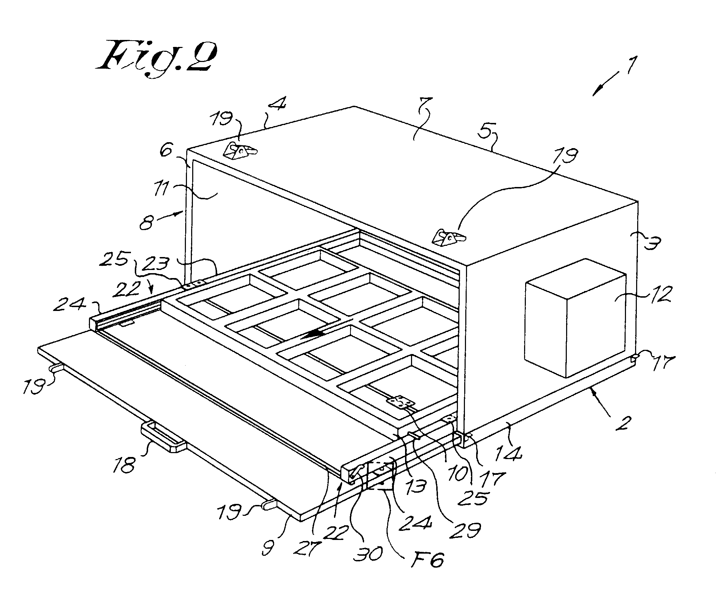

In den Figuren 2 bis 5 wird eine praktischere Ausführung der vorgenannten Kühlbox dargestellt.

Der Boden 2 der Kiste 1 ist in dieser Ausführung ein Sockel, der beispielsweise aus einem Metallrahmen 14, der mit armiertem Beton 15 gefüllt ist, oder vollständig aus armiertem Beton besteht. Durch diesen Beton 15 erstreckt sich eine Abfuhrleitung 16, die den Innenraum 11 mit der Umgebung verbindet.

Diese Abfuhrleitung 16 kann über dem daneben befindlichen Bodenniveau münden, das natürlich niedriger als der Boden 2 gelegen sein muß, oder kann an eine Abwassergrube, Fettgrube oder derartiges angeschlossen sein.

Der Sockel 14-15 kan mit einer feuchtigkeitshemmenden Schutzschicht verkleidet werden.

Er ist mit Haken 17 versehen, womit er und somit die gesamte Kühlbox für einen eventuellen Transport hochgehoben werden kann.

Die isolierten aufrecht stehenden Wände 3, 4 und 5 und die obere Wand 7 und die die Tür 9 bildende Vorderwand 6 sind Paneele, die beispielsweise aus Metallwänden mit isolierendem Material, beispielsweise Polyurethanschaum, dazwischen bestehen.

Die Tür 9 ist mit einem Handgriff 18 versehen, während die Kühlbox mit einem oder mehr Verschlüssen 19 zum Verriegeln der Tür 9 in geschlossenem Zustand versehen ist.

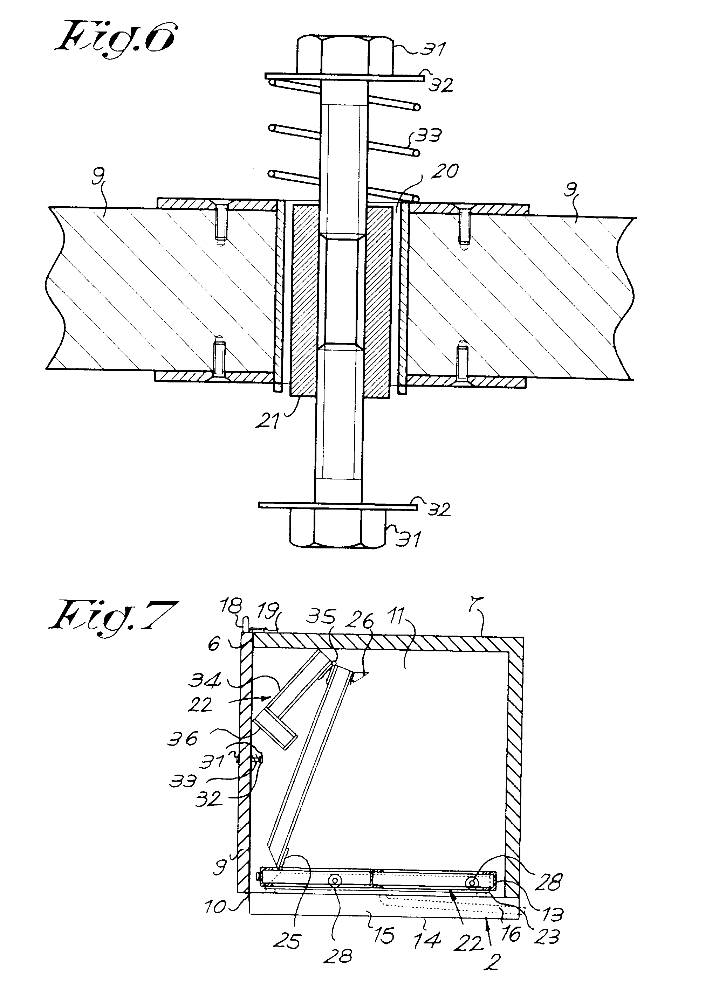

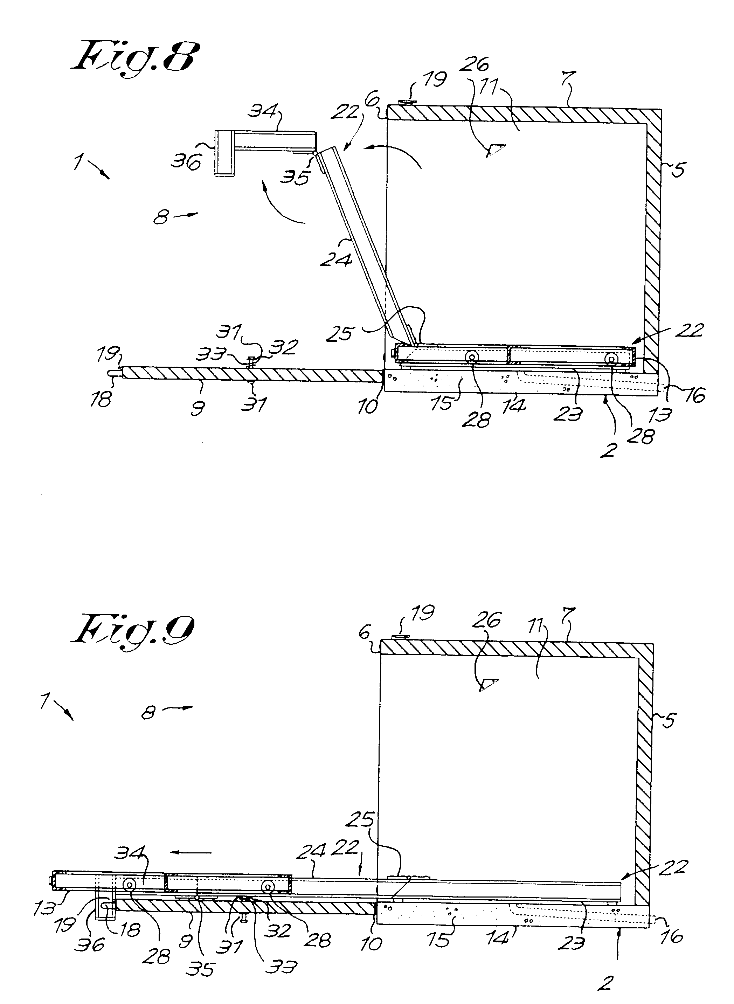

Die Tür 9 besitzt nahe jeder kurzen Seitenkante eine durch Metallkanten verstärkte Öffnung 20, worin, wie in Figur 6 detailliert wiedergegeben ist, eine mit einem Innengewinde versehene Buchse 21 lose angebracht ist, deren Funktion weiter auseinandergesetzt wird.

Das bewegbare Tragelement 13 ist ein Rost, worauf eventuell eine Platte gelegt werden kann.

An gegenüberliegenden Seiten des Bodens 2 sind Führungen 22 für dieses bewegbare Tragelement 13 angebracht.

Jede Führung 22 besteht aus zwei Teilen 23 und 24, die an ihrer Oberkante mit einem Scharnier 25 aneinander befestigt sind.

Das Teil 23 ist auf dem Sockel 14-15 befestigt, entlang einer Seitenwand 3 oder 4, und erstreckt sich praktisch über die gesamte Tiefe des Innenraums 11.

Das Teil 24 ist in Bezug zu diesem festen Teil 23 aus einer Endposition verdrehbar, wobei es sich im Innenraum 11 befindet und beispielsweise praktisch vertikal gegen einen an der oberen Wand 7 befestigten Anschlag 26 anliegt, bis in eine zweite Endposition, wobei es sich, bei heruntergeklappter Tür 9, in der Verlängerung des festen Teils 23 befindet, ohne über diese Tür 9 hinauszuragen.

Die miteinander verbundenen Enden der Teile 23 und 24 sind über 45° abgeschrägt.

Die freien Enden der Teile 24 der zwei Führungen 22 sind mit einer Verstärkungslatte 27 miteinander verbunden.

Das bewegbare Tragelement 13 ist über diese Führungen 22 verrollbar und besitzt dazu an gegenüberliegenden Seiten zwei Räder 28, während die Führungen 22 Rinnen oder Schienen für diese Räder 28 bilden.

Auf dem Tragelement 13 steht ein Zapfen 29, der über eine Seitenkante davon herausragt und mit einem an einem der Teile 24 angebrachten scharnierbeweglichen Riegel 30 zusammenwirkt.

Wie in Figur 6 detailliert dargestellt, ist eine Stütze für jedes Teil 24 vorhanden, die durch zwei Stellschrauben 31 gebildet wird, die von beiden Enden her in die vorgenannte Buchse 21 geschraubt sind. Jede Stellschraube 31 wird von einem Ring 32 umgeben, dessen Außendurchmesser größer ist als der Durchmesser der Öffnung 20, während die obere Stellschraube 31 zwischen ihrem Ring 32 und dem Rand der Öffnung 20 von einer Spiralfeder 33 umgeben sein kann.

Das Verstauen eines Kadavers in der Kühlbox oder das Entfernen daraus geschieht auf dieselbe Weise wie weiter oben beschrieben, mit hauptsächlich dem Unterschied, daß nach oder während des Herunterklappens der Tür 9 auch die Teile 24 der Führungen 22 heruntergeklappt werden.

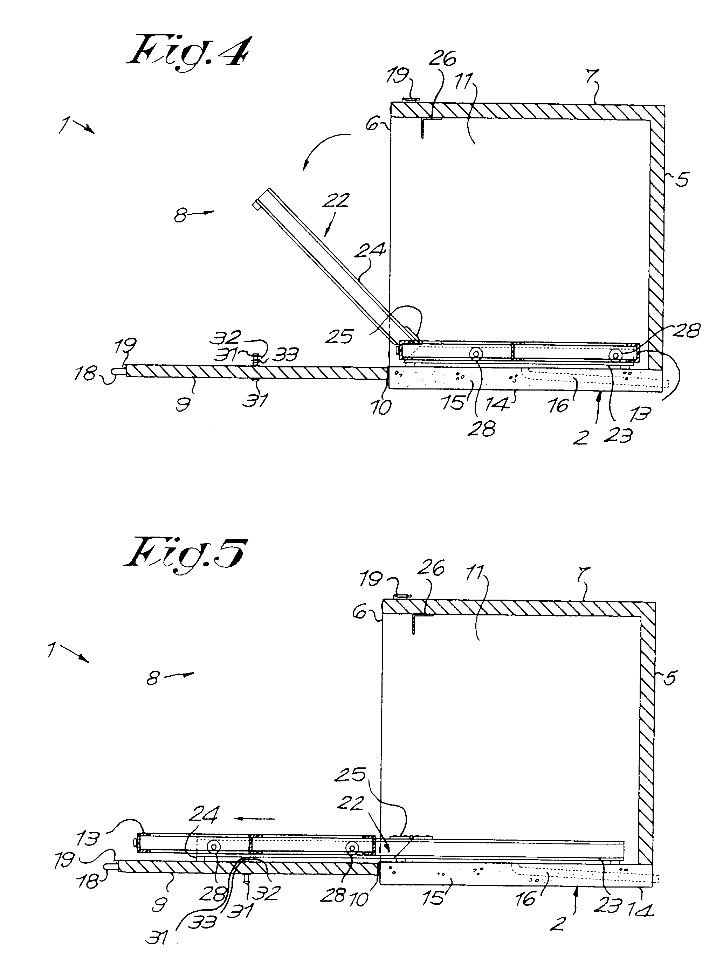

Nach dem Entriegeln der Führungen 19 wird die Tür 9, ab der in Figur 3 dargestellten Position, mit Hilfe des Handgriffs 18 heruntergeklappt.

Das Herunterklappen der Tür 9 kann in einer Variante durch eine Gasfeder oder andere federnde Mittel abgebremst werden.

Das Herunterklappen der Teile 24 geschieht manuell, und in Figur 4 sind diese Teile 24 während des Herunterklappens dargestellt.

In einer Variante ist es auch möglich, daß die Teile 24 in ihrer innerhalb des Innenraums 11 gelegenen Endposition nicht gegen den Anschlag 26 anliegen, sondern gegen die Tür 9 und etwas nach vorn abfallen, wodurch diese Teile automatisch nach unten fallen, wenn die Tür 9 heruntergeklappt wird.

In noch einer anderen Variante sind die Teile 24 mittels Kopplungen, die, in Anbetracht dessen, daß die Scharnierachse der Tür 9 und die Scharnierachsen der Scharniere 10 nicht zusammenfallen, eine geringe Verschiebung in der Längsrichtung der Teile 24 gestatten müssen, an die Tür 9 gekoppelt.

Nach dem Herunterklappen der Teile 24 werden die Stellschrauben 31 eingestellt, bis diese Teile 24 in der Verlängerung der Teile 23 liegen, wenn dies noch nicht der Fall war.

Die Teile 24 stützen unter Dazwischentreten dieser Stellschrauben 31 und der Buchse 21 direkt auf den Boden, wodurch das ganze Gewicht des Tragelements 13 mit dem Kadaver darauf mittels der Führungen 22 auf den Boden 2 oder direkt auf den Erdboden übertragen wird.

Anschließend wird das bewegbare Tragelement 13 manuell aus dem Innenraum 11 gerollt, bis in die in Figur 5 dargestellte Position, worin der Zapfen 29 durch den Riegel 30 angehalten und verriegelt wird.

Nach dem Plazieren des Kadavers auf dem Tragelement 13 wird dieses Tragelement 13, nach dem Entriegeln des Riegels 30, erneut in den Innenraum 11 gerollt, wonach die Teile 24 der Führungen 22 wieder in diesen Innenraum 11 zurückgeklappt werden und die Tür 9 wieder zugeschwenkt wird.

Die vorgenannten federnden Elemente können eventuell dieses Zuschwenken erleichtern.

In Varianten kann das Hinein- und Herausrollen des Tragelements statt manuell mittels Hilfsmitteln stattfinden, beispielsweise mittels Hebebäumen, Zugsystemen, hydraulischen oder pneumatischen Antrieben, Gasfedern oder Spiralfedern, Motoren oder anderen Bewegungsmechanismen.

Die geschlossene Tür 9 schließt den Innenraum 11 hermetisch ab, so daß dieser Innenraum 11 mittels des Kühlmechanismus 12 mit einem Minimum an Energie bis zur gewünschten Temperatur gekühlt werden kann.

Bei einer Außentemperatur von 30°C kann die Temperatur im Innenraum 11 auf ungefähr 2°C gebracht werden.

Die Konstruktion der Teile ist derart, daß Lasten bis über 1000 kg auf dem bewegbaren Tragelement 13 plaziert werden können.

Vom Kadaver herrührendes Blut bzw. Flüssigkeit fließen über die Abfuhrleitung 16 aus dem Innenraum 11 ab.

Nach Gebrauch kann die Kühlbox leicht gereinigt werden.

Die Kühlbox kann sowohl drinnen als auch draußen aufgestellt werden, da sie gegen ungünstige Witterungsbedingungen beständig ist.

Wenn der Boden 2 durch einen Sockel 14-15 geformt ist, kann dieser lose auf den Boden gestellt werden.

Anstelle eines Sockels 14-15 kann der Boden 2 Teil eines Fußbodens formen, worauf die Führungen 22 direkt befestigt werden. Der Rest der Kühlbox kann dann über diesen Führungen 22 positioniert werden.

Die in den Figuren 7 bis 9 dargestellte Ausführungsform unterscheidet sich von der Ausführungsform gemäß den Figuren 3 bis 6 hauptsächlich dadurch, daß die Führungen 22 aus drei Teilen bestehen und somit außer einem Teil 23 und einem Teil 24 ein zusätzliches Teil 34 besitzen, das an seiner Unterseite mittels eines Scharniers 35 scharnierbeweglich an einem Ende des Teils 24 befestigt ist.

Am freien Ende des Teils 34 schließt ein dazu rechtwinklig gerichteter Fuß 36 an.

Dieses Teil 34 ist schwenkbar zwischen einer Position, wobei es sich auf dem Teil 24 befindet, wie in Figur 7 dargestellt, und einer Position, wobei es sich in der Verlängerung dieses Teils 24 befindet, wie in Figur 9 dargestellt.

Der vorgenannte Anschlag 26 befindet sich in dieser Ausführungsform tiefer im Innenraum 11, derart, daß in der nach innen geschwenkten Position des Teils 24 dieses letztere nach innen abfällt und auch das Teil 34 noch in den Innenraums 11 fällt, wenn es gegen das Teil 24 geschwenkt ist, so daß die Tür 9 geschlossen werden kann, wie in Figur 7 dargestellt.

Die Verwendung der Kühlbox ist analog zur Ausführungsform gemäß den Figuren 2 bis 6, mit diesem Unterschied, daß beim Auf- und Zuklappen der Führungen 22 auch die Teile 34 geschwenkt werden. Diese Führungen sind in den Figuren 7 bis 9 in verschiedenen Positionen dargestellt.

In aufgeklappter Position befindet sich das Teil 34 jeder Führung 22 in der Verlängerung der Teile 23 und 24 und steht dessen Fuß 36 auf dem Boden auf.

Der Vorteil dieser Ausführungsform ist, daß die Führungen 22 sich über die Tür 9 hinaus erstrecken und das Tragelement 13 weiter aus dem Innenraum 11 herausgerollt werden kann. Das Tragelement 13 kann größer gemacht werden, indem nur die Tiefe des Innenraums 11 vergrößert wird, ohne daß dessen Höhe vergrößert werden muß.

Um zu verhindern, daß bei Frost die Tür 9 am Rest festfriert, können die Kanten der Tür 9 eventuell beheizt werden, beispielsweise durch elektrische Widerstände oder eine Gasheizung.

Die Erfindung ist keineswegs auf die hiervor beschriebenen und in den Figuren dargestellten Ausführungsformen beschränkt, vielmehr kann eine derartige Kühlbox in verschiedenen Varianten verwirklicht werden, ohne den Rahmen der Erfindung zu verlassen.

## Patentansprüche

1. Kühlbox, bestehend aus einem Boden (2), mit auf diesem Boden (2) stehenden isolierten aufrecht stehenden Wänden (3,4,5,6) und einer an diesen Wänden (3,4,5,6) anschließenden isolierten oberen Wand (7), die zusammen einen geschlossenen Innenraum (11) begrenzen, und einem Kühlmechanismus (12) zum Kühlen dieses Innenraums (11), wobei in einer der aufrecht stehenden Wände (3,4,5,6) eine Tür (9) angebracht ist und über dem vorgenannten Boden (2) ein bewegbares Tragelement (13) angebracht ist, das durch die in offener Position befindliche Tür (9) zwischen einer Position, worin es sich vollständig im Innenraum (11), über dem Boden (2), befindet, und einer Position, wobei es sich ganz oder teilweise außerhalb des Innenraums (11) befindet, bewegt werden kann, *dadurch gekennzeichnet,* daß der Boden (2) mit Führungen (22) für das bewegbare Tragelement (13) versehen ist, wobei die Führungen (22) jeweils mindestens zwei Teile (22,24,34) umfassen, die scharnierbeweglich miteinander verbunden sind und wovon mindestens ein Teil bis außerhalb des Innenraums (11) gebracht werden kann.

2. Kühlbox gemäß Anspruch 1, dadurch gekennzeichnet, daß ein Teil der Führungen (22) am Boden (2) befestigt ist.

3. Kühlbox gemäß den Ansprüchen 1 und 2, dadurch gekennzeichnet, daß die Führungen (22) jeweils drei Teile (23,24,34) umfassen, wobei das eine Teil (23) fest ist und die anderen Teile (24 und 34) scharnierbeweglich in Bezug zueinander aufgestellt sind und das äußerste Teil (34) mit einem Fuß (36) versehen ist.

4. Kühlbox gemäß einem der Ansprüche 1 bis 3, dadurch gekennzeichnet, daß das bewegbare Tragelement (13) mit Rädern (28) versehen und über die Führungen (22) verrollbar ist.

5. Kühlbox gemäß einem der Ansprüche 1 bis 4, dadurch gekennzeichnet, daß sie Mittel (29-30) zum Verriegeln des bewegbaren Tragelements (13) in Bezug zu mindestens einer der Führungen (22) umfaßt.

6. Kühlbox gemäß einem der Ansprüche 1 bis 5, dadurch gekennzeichnet, daß sie Führungen (22) mit mindestens einem festen Teil (23) und mindestens einem bewegbaren Teil (24,34) umfaßt und sie Stützen für mindestens ein bewegbares Teil (24,34) umfaßt.

7. Kühlbox gemäß Anspruch 6, dadurch gekennzeichnet, daß die Stützen für das bewegbare Teil (24,34) der Führungen (22) einstellbar sind und jeweils mindestens eine Stellschraube (31), die in eine Buchse (21) geschraubt ist, umfassen.

8. Kühlbox gemäß den Ansprüchen 6 und 7, dadurch gekennzeichnet, daß die Buchse (21) in einer Öffnung (20) in der Tür (9) angebracht ist und von beiden Enden der Buchse (21) her eine Stellschraube (31) darin eingeschraubt ist, wobei an den Stellschrauben (31) Ringe (32) angebracht sind, die größer als die Öffnung (20) in der Tür (9) sind.

9. Kühlbox gemäß einem der vorangehenden Ansprüche, dadurch gekennzeichnet, daß der Boden (2) durch einen Sockel (14-15) geformt ist.

10. Kühlbox gemäß einem der vorangehenden Ansprüche, dadurch gekennzeichnet, daß die Abmessungen des Innenraums (11) und die Abmessungen und die Konstruktion des bewegbaren Tragelements (13) derart sind, daß dieses Tragelement (13) einen Kadaver tragen und in den Innenraum (11) hinein- und herausbringen kann.
